# EUROPEAN PATENT APPLICATION

(11) **EP 2 048 757 A1**
(43) Date of publication of application: **15.04.2009**
(21) Application number: 07768218.5
(22) Date of filing: 05.07.2007
(51) Int. Cl.: H02J 3/00, F24F 11/02

(54) **POWER CONTROL DEVICE**

(30) Priority: 07.07.2006 JP 2006188430
(71) Applicant: Daikin Industries, Ltd., Osaka 530-8323 (JP)
(72) Inventor: TAKEGAMI, Masaaki, Sakai-shi Osaka 591-8511 (JP); NAKAJIMA, Hiroto, Sakai-shi Osaka 591-8511 (JP); SAKAE, Satoru, Sakai-shi Osaka 591-8511 (JP)
(74) Representative: HOFFMANN EITLE
(86) International application number: PCT/JP2007/063469
(87) International publication number: WO 2008/004625

(57) **Abstract**

In a store, a plurality of electric apparatuses including an air conditioner, a lighting apparatus, a water heater and a refrigeration unit are provided and connected to a single main power supply. An electric energy control system includes an electric energy detection part, an electric energy supervising part, an air conditioner derivation part and an air conditioner control part. The electric energy detection part detects the total electric energy consumption of the plurality of electric apparatuses. The electric energy supervising part outputs a demand signal when the total electric energy consumption detected by the electric energy detection part exceeds a set amount of electric energy. When the demand signal is output, the air conditioner control part employs as a default value A the electric current value of the air conditioner at the start of output of the demand signal, which has been derived by the air conditioner derivation part, and controls the air conditioner so that the electric current of the air conditioner reaches a target value TA reduced from the default value by a set amount of reduction Da1 determined based on the default value.

## Description

### TECHNICAL FIELD

This invention relates to electric energy control systems and particularly relates to measures for reducing the total electric energy consumption.

### BACKGROUND ART

In industrial and commercial installations, such as office buildings, a plurality of electric apparatuses including lighting apparatuses and air conditioners are used with a single main power supply. Such an installation employs an electric energy control system for controlling each of the plurality of electric apparatuses so that the total electric energy consumption of the apparatuses does not exceed a set value of electric energy (for example, a contract amount of electric energy contracted with an electric power company) (see, for example, Patent Document 1).

An electric energy control system disclosed in Patent Document 1 includes an electric energy calculation means for calculating the total electric energy consumption of a plurality of electric apparatuses including a plurality of air conditioners, a demand control means for supervising the total electric energy consumption, and air conditioner controllers for controlling their respective air conditioners.

In the above electric energy control system, when the total electric energy consumption calculated by the electric energy calculation means exceeds a predetermined upper limit, the demand control means outputs a demand signal and the air conditioner controllers thereby shift the preset temperatures of their respective associated air conditioners by a predetermined temperature. Specifically, when a demand signal is output, each air conditioner controller controls, during a cooling operation, the associated air conditioner to raise the preset temperature in steps of 1 °C and controls, during a heating operation, the associated air conditioner to drop the preset temperature in steps of 1°C. Thus, the electric energy consumption of each air conditioner is reduced, whereby the total electric energy consumption is reduced to the predetermined upper limit or below.
Patent Document 1: Published Japanese Patent Application No. H01-118051

### DISCLOSURE OF THE INVENTION

### PROBLEMS TO BE SOLVED BY THE INVENTION

The electric energy control system disclosed in Patent Document 1 shifts the preset temperature of each air conditioner in steps of a fixed predetermined temperature width. Therefore, if the predetermined temperature width is set to a small value, there arises a problem that when the total electric energy consumption greatly exceeds the predetermined upper limit, it takes a long time to reduce the total electric energy consumption to the upper limit or below. On the contrary, if the predetermined temperature width is set to a large value, there arises a problem that when the total electric energy consumption slightly exceeds the predetermined upper limit, the electric energy consumption of each air conditioner is reduced more than necessary. In other words, the electric energy control system has a problem that since the width of change in the preset temperature of each air conditioner, which is a physical value relevant to the electric energy consumption of the air conditioner, is fixed, the total electric energy consumption cannot be appropriately controlled.

The present invention has been made in view of the foregoing points and, therefore, an object thereof is to provide an electric energy control system that can appropriately control the total electric energy consumption of a plurality of electric apparatuses.

### MEANS TO SOLVE THE PROBLEM

In the present invention, the amount of reduction of electric energy consumption of each of a plurality of electric apparatuses is controlled according to the electric energy consumption of the electric apparatus at the time when the total electric energy consumption of the plurality of electric apparatuses has exceeded a set amount of electric energy.

Specifically, a first aspect of the invention is an electric energy control system including: electric energy detecting means (12) for detecting the total electric energy consumption of a plurality of electric apparatuses (20, 40, 80, 90); derivation means (62, 72) for deriving a physical value relevant to the electric energy consumption of previously assigned at least one first electric apparatus (20, 40) of the plurality of electric apparatuses (20, 40, 80, 90); and electric energy supervising means (13) for outputting a demand signal when the total electric energy consumption detected by the electric energy detecting means (12) exceeds a predetermined set amount of electric energy. In addition, the electric energy control system further includes control means (63, 73) for controlling the first electric apparatus (20, 40) to reduce the electric energy consumption of the first electric apparatus (20, 40) so that when the electric energy supervising means (13) outputs the demand signal, the control means (63, 73) employs as a default value the physical value of the first electric apparatus (20, 40) at the start of output of the demand signal and brings the physical value of the first electric apparatus (20, 40) to a target value changed from the default value by a set amount determined based on the default value.

In the first aspect of the invention, for example, the derivation means (62, 72) may directly derive the electric energy as the physical value relevant to the electric energy consumption or may derive the electric current that is a physical value relevant to the electric energy.

In the first aspect of the invention, when the total electric energy consumption detected by the electric energy detecting means (12) exceeds the set amount of electric energy, for example, with the plurality of electric apparatuses (20, 40, 80, 90) operated with their respective capacities meeting their loads, the electric energy supervising means (13) outputs a demand signal. If the electric energy consumption of the first electric apparatus (20, 40) is large at the time of output of the demand signal, it is expected that the total electric energy consumption will significantly exceed the set amount of electric energy. On the other hand, if the electric energy consumption of the first electric apparatus (20, 40) is small at the time of output of the demand signal, it is expected that the total electric energy consumption will slightly exceed the set amount of electric energy. In view of this, the control means (63, 73) controls the physical value of the first electric apparatus (20, 40) so that the electric energy consumption of the first electric apparatus (20, 40) is increasingly reduced as the electric energy consumption of the first electric apparatus (20, 40) at the time of output of the demand signal increases.

Specifically, the control means (63, 73) employs as a default value the physical value at the start of output of the demand signal, which has been derived by the derivation means (62, 72), and brings the physical value of the first electric apparatus (20, 40) to a target value changed from the default value by the set amount based on the default value. More specifically, when the physical value is the electric current, the set amount of electric current is set to increase as the default value of electric current of the first electric apparatus (20, 40) increases and the electric current is changed to reduce by the set amount.

A second aspect of the invention is the electric energy control system according to the first aspect of the invention, wherein the control means (63, 73) sets the target value by changing the default value by the set amount at specified time intervals.

In the second aspect of the invention, since the physical value of the first electric apparatus (20, 40) is changed by the set amount at specified time intervals, the electric energy consumption of the first electric apparatus (20, 40) is certainly reduced at specified time intervals.

A third aspect of the invention is the electric energy control system according to the second aspect of the invention, wherein when the target value reaches a limit of the physical value of the preset first electric apparatus (20, 40), the control means (63, 73) sets the limit as the target value.

In the third aspect of the invention, the limit of the physical value of the first electric apparatus (20, 40) is a physical value necessary to operate the first electric apparatus (20, 40) (For example, when the physical value is electric current, the limit is a lower limit of electric current necessary to operate it). Thus, even if the physical value of the first electric apparatus (20, 40) changes, the control means (63, 73) allows the first electric apparatus (20, 40) to continue to be operated.

A fourth aspect of the invention is the electric energy control system according to any one of the first to third aspects of the invention, further including holding means (65, 75) for controlling the first electric apparatus (20, 40) so that when the electric energy supervising means (13) stops outputting the demand signal, the physical value of the first electric apparatus (20, 40) is held at the target value at the stop of output of the demand signal until a predetermined holding time passes since the stop of output of the demand signal.

In the fourth aspect of the invention, the stop of output of the demand signal from the electric energy supervising means (13) means that the total electric energy consumption of the plurality of electric apparatuses (20, 40, 80, 90) has reached the set amount of electric energy or below. Therefore, the electric energy consumption of the first electric apparatus (20, 40) need not be reduced any more. However, when the electric energy consumption of the first electric apparatus (20, 40) is increased to meet the load, it is highly possible that a demand signal will be output again. To cope with this, the holding means (65, 75) holds the physical value of the first electric apparatus (20, 40) at the target value at the stop of output of the demand signal, thereby holding the electric energy consumption of the first electric apparatus (20, 40) at a large amount insofar as no demand signal is output (i.e., insofar as the total electric energy consumption does not exceed the set amount of electric energy). In other words, the first electric apparatus (20, 40) is held to meet the load as much as possible.

A fifth aspect of the invention is the electric energy control system according to the fourth aspect of the invention, further including returning means (66, 76) configured, when the holding time of the holding means (65, 75) has passed without a next demand signal being output from the electric energy supervising means (13), to return the physical value of the first electric apparatus (20, 40) to a value before the output of the previous demand signal from the electric energy supervising means (13).

In the fifth aspect of the invention, when the holding time of the holding means (65, 75) has passed without a next demand signal being output from the electric energy supervising means (13), the returning means (66, 76) returns the physical value of the first electric apparatus (20, 40) to allow the first electric apparatus (20, 40) to be operated again with an electric energy consumption meeting the load.

A sixth aspect of the invention is the electric energy control system according to any one of the first to fifth aspects of the invention, wherein the first electric apparatus (20, 40) is an electric apparatus (20, 40) having low priority to meet the load, and the remaining second electric apparatus (80, 90) other than the first electric apparatus (20, 40) is an electric apparatus (80, 90) having high priority to meet the load.

In the sixth aspect of the invention, examples of the first electric apparatus (20, 40) include an air conditioner (20) and a water heater (40) and examples of the second electric apparatus (80, 90) include a lighting apparatus (80) and a refrigeration unit (90). If, upon output of a demand signal, the physical value relevant to the electric energy consumption of the lighting apparatus (80) is controlled to reduce the electric energy consumption, this significantly deteriorates the workability of a person using the lighting apparatus (80). In another case, if the physical value relevant to the electric energy consumption of the refrigeration unit (90) is controlled to reduce the electric energy consumption, this significantly degrades the quality of stored goods cooled by the refrigeration unit (90), such as food products.

On the other hand, even if the physical value relevant to the electric energy consumption of the air conditioner (20) is controlled to reduce the electric energy consumption, the room comfort is somewhat deteriorated but the deterioration in room comfort does not matter as much as the above-stated deterioration in workability or degradation in quality of food products. In addition, even if the physical value relevant to the electric energy consumption of the water heater (40) is controlled to reduce the electric energy consumption, the water heater (40) can store hot water in the hot water storage tank (42) to store heat. Therefore, until the output of the demand signal is stopped, the water heater (40) can be operated with low electric energy to use stored hot water.

For the above reasons, in the sixth aspect of the invention, the high-priority lighting apparatus (80) and refrigeration unit (90) are operated to meet their loads without their physical values being controlled, while the low-priority air conditioner (20) and water heater (40) are controlled in terms of their physical values in order to reduce the total electric energy consumption. Note that the above-stated priorities to meet the loads are illustrative only and that the lighting apparatus (80) and the air conditioner (20) may be assigned as a first electric apparatus having high priority to meet the load and a second electric apparatus having low priority to meet the load, respectively. Alternatively, the first and second electric apparatuses may be appropriately selected depending on the season or time.

A seventh aspect of the invention is the electric energy control system according to the sixth aspect of the invention, wherein the first electric apparatus (20, 40) is an air conditioner (20).

In the seventh aspect of the invention, when the demand signal is output, the control means (63) controls the physical value relevant to the electric energy consumption of the air conditioner (20) to reduce the electric energy consumption of the air conditioner (20).

An eighth aspect of the invention is the electric energy control system according to the seventh aspect of the invention, wherein the air conditioner (20) includes a refrigerant circuit in which an indoor heat exchanger (31), a compressor (26) whose capacity is variable, a heat-source side heat exchanger (28) and an expansion mechanism (29) are connected in this order, and the physical value relevant to the electric energy is one of the electric current of the air conditioner (20), the electric energy consumption of the air conditioner (20), the operating capacity of the compressor (26), the pressure of high-pressure refrigerant in the refrigerant circuit and the preset temperature of the air conditioner (20).

In the eighth aspect of the invention, when the demand signal is output, the control means (63) controls as the physical value of the air conditioner (20) one of the electric current of the air conditioner (20), the electric energy consumption of the air conditioner (20), the operating capacity of the compressor (26), the pressure of the high-pressure refrigerant and the preset temperature of the air conditioner (20) to reduce the electric energy consumption of the air conditioner (20).

A ninth aspect of the invention is the electric energy control system according to the seventh aspect of the invention, wherein the air conditioner (20) is configured to perform at least a cooling operation in which the indoor heat exchanger (31) serves as an evaporator and the heat-source side heat exchanger (28) serves as a condenser and comprises a sprayer (33) for spraying water on the heat-source side heat exchanger (28), and the control means (63) controls the sprayer (33) so that when the electric energy supervising means (13) outputs the demand signal, the sprayer (33) sprays water on the heat-source side heat exchanger (28).

In the ninth aspect of the invention, when the demand signal is output, the sprayer (33) sprays water on the heat-source side heat exchanger (28) serving as a condenser to reduce the pressure of the high-pressure refrigerant, thereby reducing the electric energy consumption of the air conditioner (20).

A tenth aspect of the invention is the electric energy control system according to any one of the seventh to ninth aspects of the invention, wherein the set amount is corrected by a correction value based on the outside air temperature.

In the tenth aspect of the invention, since the air conditioning load of the air conditioner (20) varies with the outside air temperature, the set amount is corrected according to the outside air temperature.

### EFFECTS OF THE INVENTION

According to the first aspect of the invention, when a demand signal is output, the physical value of the first electric apparatus (20, 40) is brought to a target value changed from a default value at the start of output of the demand signal by the set amount determined based on the default value. Therefore, the total electric energy consumption can certainly be reduced without reduction of the electric energy consumption of the first electric apparatus (20, 40) more than necessary. Thus, the total electric energy consumption of the plurality of electric apparatuses (20, 40, 80, 90) can certainly be reduced to the set amount of electric energy or below.

According to the second aspect of the invention, since the physical value of the first electric apparatus (20, 40) is changed by the set amount at specified time intervals, the total electric energy consumption can certainly be reduced.

According to the third aspect of the invention, the control means (63, 73) certainly allows the first electric apparatus (20, 40) to continue to be operated even if the physical value of the first electric apparatus (20, 40) changes.

According to the fourth aspect of the invention, when the electric energy supervising means (13) stops outputting the demand signal, the holding means (65, 75) holds the physical value of the first electric apparatus (20, 40) at the target value at the stop of output of the demand signal. Therefore, the first electric apparatus (20, 40) can maintain the electric energy consumption at an amount as large as possible insofar as no demand signal is output, i.e., insofar as the total electric energy consumption does not exceed the set amount of electric energy. Thus, the first electric apparatus (20, 40) can be operated to meet the load as much as possible.

According to the fifth aspect of the invention, when the holding time of the holding means (65, 75) has passed without a next demand signal being output from the electric energy supervising means (13), the returning means (66, 76) returns the physical value of the first electric apparatus (20, 40). Therefore, the first electric apparatus (20, 40) can be operated again with a capacity meeting the load.

According to the sixth aspect of the invention, since the second electric apparatus (80, 90) having high priority to meet the load is not controlled on the physical value to restrict its electric energy consumption, the second electric apparatus (80, 90) can certainly perform an appropriate operation meeting to the load.

According to the seventh aspect of the invention, since the electric energy consumption of the air conditioner (20) can be reduced, the total electric energy consumption of the plurality of electric apparatuses (20, 40, 80, 90) can be reduced.

According to the eighth aspect of the invention, since the control means (63) controls as the physical value of the air conditioner (20) one of the electric current of the air conditioner (20), the electric energy consumption of the air conditioner (20), the operating capacity of the compressor (26), the pressure of the high-pressure refrigerant and the preset temperature of the air conditioner (20), the electric energy consumption of the air conditioner (20) can certainly be reduced.

According to the ninth aspect of the invention, since during the cooling operation of the air conditioner (20) the sprayer (33) sprays water on the heat-source side heat exchanger (28), the pressure of the high-pressure refrigerant can be reduced in a simple manner to reduce the electric energy consumption of the air conditioner (20).

According to the tenth aspect of the invention, since the set amount is corrected by a correction value based on the outside air temperature, the electric energy consumption of the air conditioner (20) can be reduced to meet the load because the load of the air conditioner (20) varies with the outside air temperature.

### BRIEF DESCRIPTION OF DRAWINGS

[FIG 1] FIG. 1 is a schematic block diagram showing the configuration of electric apparatuses in a store according to Embodiment 1 and an electric energy control system according to Embodiment 1.
[FIG 2] FIG. 2 is a schematic circuit diagram of an air conditioner according to Embodiment 1.
[FIG. 3] FIG 3 is a schematic circuit diagram of a water heater according to Embodiment 1.
[FIG. 4] FIG 4 is a flow chart showing the control of the electric energy control system according to Embodiment 1.
[FIG. 5] FIG 5 is a schematic block diagram of an electric energy control system according to Modification 1 of Embodiment 1.
[FIG. 6] FIG 6 is a graph and diagram showing a method for setting a set amount of reduction according to Modification 2 of Embodiment 1.

### LIST OF REFERENCE NUMERALS

- 1: electric energy control system
- 12: electric energy detection part (electric energy detecting means)
- 13: electric energy supervising part (electric energy supervising means)
- 20: air conditioner (first electric apparatus)
- 40: water heater (first electric apparatus)
- 63: air conditioner control part (control means)
- 80: lighting apparatus (second electric apparatus)
- 90: refrigeration unit (second electric apparatus)
- 62: air conditioner derivation part (derivation means)
- 65: air conditioner holding part (holding means)
- 66: air conditioner returning part (returning means)
- 72: water heater derivation part (derivation means)
- 73: water heater control part (control means)
- 75: water heater holding part (holding means)
- 76: water heater returning part (returning means)
- 31: indoor heat exchanger
- 26: air conditioner compressor (compressor)
- 28: outdoor heat exchanger (heat-source side heat exchanger)
- 29: air conditioner expansion valve (expansion mechanism)
- 33: sprayer (sprayer)

### BEST MODE FOR CARRYING OUT THE INVENTION

Embodiments of the present invention will be described below in detail with reference to the drawings.

### << EMBODIMENT 1 OF THE INVENTION>>

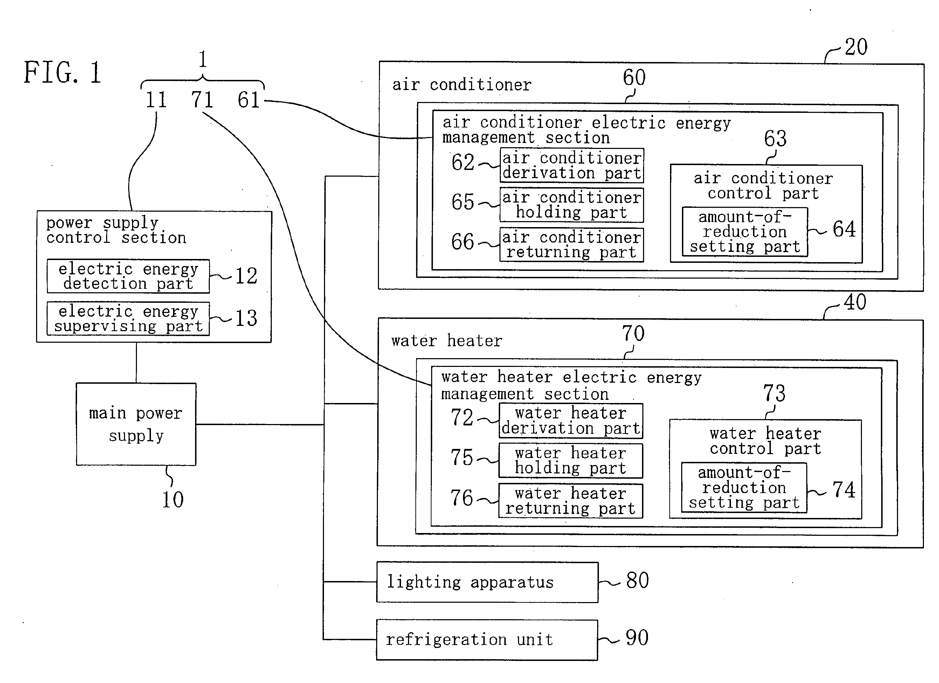

As shown in FIG 1, in Embodiment 1 of the present invention, an air conditioner (20), a water heater (40), a lighting apparatus (80) and a refrigeration unit (90) are connected as a plurality of electric apparatuses to a main power supply (10) in a store, such as a convenience store. An electric energy control system (1) according to this embodiment is configured to control the electric energies of the air conditioner (20) and the water heater (40) when the total electric energy consumption of the plurality of electric apparatuses (20, 40, 80, 90) exceeds a predetermined set amount of electric energy determined from a contract amount of electric energy of the store, and includes respective electric energy management sections (61, 71) built in the air conditioner (20) and the water heater (40). Specifically, as described later, the electric energy control system (1) controls, as physical values relevant to the electric energy consumptions of the air conditioner (20) and the water heater (40), their electric currents.

The air conditioner (20) is configured to air-condition a room, and the water heater (40) is configured to supply hot water such as to a kitchen in the store. The air conditioner (20) and the water heater (40) are controlled in terms of electric energy by the electric energy control system (1) as described above and constitute first electric apparatuses.

The lighting apparatus (80) is configured to illuminate the interior of the store, and the refrigeration unit (90) is configured to freeze or chill food products that are goods in the store. The lighting apparatus (80) and the refrigeration unit (90) are operated to meet their loads without control of the electric energy control system (1) over their electric currents and constitute second electric apparatuses.

### (CONFIGURATION OF AIR CONDITIONER)

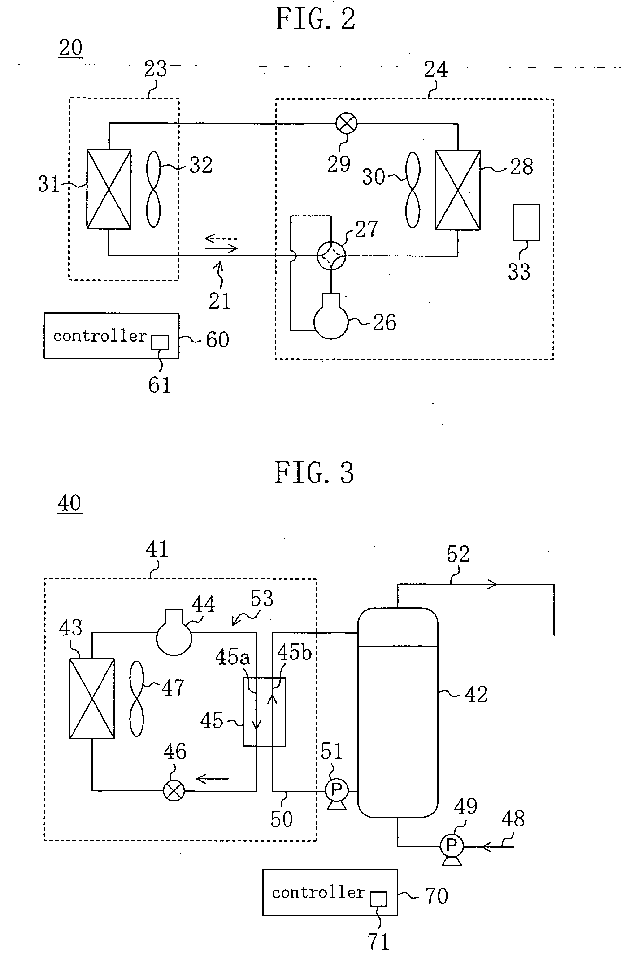

As shown in FIG. 2, the air conditioner (20) includes an indoor unit (23) and an outdoor unit (24), wherein these units (23, 24) are connected via refrigerant pipes to constitute a refrigerant circuit (21) operable in a vapor compression refrigeration cycle. Furthermore, the air conditioner (20) also includes a controller (60) in which the air conditioner electric energy management section (61) is built, which is a feature of the present invention.

The outdoor unit (24) is placed outdoors and includes an air conditioner compressor (26), a four-way selector valve (27), an outdoor heat exchanger (28) and an air conditioner expansion valve (29). The air conditioner compressor (26) is, for example, a scroll compressor and is configured so that electric energy is supplied through an inverter to an unshown compressor motor and its operating capacity can be varied by changing the output frequency of the inverter. The outdoor heat exchanger (28) is a cross-fin type fin-and-tube heat exchanger for exchanging heat between refrigerant and outside air and constitutes a heat-source side heat exchanger. The air conditioner expansion valve (29) is an electronic expansion valve regulatable in opening and constitutes an expansion mechanism.

In the outdoor unit (24), an outdoor fan (30) and a water sprayer (33) are disposed close to the outdoor heat exchanger (28). The outdoor fan (30) is configured to take in outside air and send it to the outdoor heat exchanger (28). The water sprayer (33) is configured to spray water on the outdoor heat exchanger (28) when the air conditioner (20) performs a cooling operation, and constitutes a sprayer.

The indoor unit (23) includes an indoor heat exchanger (31) and an indoor fan (32) disposed close to the indoor heat exchanger (31). The indoor heat exchanger (31) is a cross-fin type fin-and-tube heat exchanger for exchanging heat between refrigerant and room air. Room air is taken into the indoor heat exchanger (31) by the indoor fan (32).

In the refrigerant circuit (21), the air conditioner compressor (26), the four-way selector valve (27), the outdoor heat exchanger (28), the air conditioner expansion valve (29) and the indoor heat exchanger (31) are connected in this order.

### (CONFIGURATION OF WATER HEATER)

As shown in FIG 3, the water heater (40) includes a heat source unit (41), a hot water storage tank (42) and a controller (70) in which the water heater electric energy management section (71) is built, which is a feature of the present invention.

The heat source unit (41) is placed outdoors. The heat source unit (41) includes a refrigerant circuit (53) which is operable in a vapor compression refrigeration cycle and in which an evaporator heat exchanger (43), a water heater compressor (44), a condenser heat exchanger (45) and a water heater expansion valve (46) are connected in this order.

The water heater compressor (44) is, for example, a scroll compressor and is configured so that electric energy is supplied through an inverter to a compressor motor and its operating capacity can be varied by changing the output frequency of the inverter.
The evaporator heat exchanger (43) is a cross-fin type fin-and-tube heat exchanger for exchanging heat between refrigerant and outside air. Disposed close to the evaporator heat exchanger (43) is an evaporator fan (47) for sending outside air to the evaporator heat exchanger (43). The condenser heat exchanger (45) is a plate heat exchanger and includes a first channel (45a) and a second channel (45b). The first channel (45a) is configured to allow refrigerant to flow therethrough, while the second channel (45b) is configured to allow the after-mentioned water for hot water supply in the hot water storage tank (42) to flow therethrough. The water heater expansion valve (46) is an electronic expansion valve regulatable in opening.

The hot water storage tank (42) is formed in a vertically long, substantially cylindrical shape, connected at its bottom to a water supply pipe (48), connected at lower and upper parts of its peripheral wall to one and the other ends of a heating pipe (50) and connected at its top to a hot water supply pipe (52). The water supply pipe (48) is configured to supply cold water into the hot water storage tank (42) and provided with a pump (49). The heating pipe (50) is connected halfway along the length to the second channel (45b) of the condenser heat exchanger (45). The heating pipe (50) is provided with a pump (51). The water for hot water supply stored in a lower part of the hot water storage tank (42) is fed to the condenser heat exchanger (45) by the pump (51), heated therein and supplied again into the hot water storage tank (42) from its top. The hot water supply pipe (52) is configured to supply water for hot water supply to the user side at user's request.

### <CONFIGURATION OF ELECTRIC ENERGY CONTROL SYSTEM>

As shown in FIG 1, the electric energy control system (1) includes a power supply control section (11), the air conditioner electric energy management section (61) and the water heater electric energy management section (71).

The power supply control section (11) is connected to the main power supply (10). Furthermore, as described above, the air conditioner electric energy management section (61) is disposed in the controller (60) of the air conditioner (20) and the water heater electric energy management section (71) is disposed in the controller (70) of the water heater (40).

### (CONFIGURATION OF POWER SUPPLY CONTROL SECTION)

The power supply control section (11) includes an electric energy detection part (12) and an electric energy supervising part (13).

The electric energy detection part (12) is configured to detect the total electric energy consumption of the plurality of electric apparatuses (20, 40, 80, 90) and constitutes an electric energy detecting means. Specifically, the electric energy detection part (12) is configured to measure the electric energy consumption of the main power supply Instead of the above configuration in which the electric energy consumption of the main power supply is directly measured, the electric energy detection part (12) may be configured so that the electric apparatuses (20, 40, 80, 90) are provided with their respective measurement means for measuring the individual electric energy consumptions of the electric apparatuses (20, 40, 80, 90) and that the total electric energy consumption is obtained by calculating the sum of the electric energy consumptions measured by the measurement means.

The electric energy supervising part (13) is configured to output a demand signal when the total electric energy consumption detected by the electric energy detection part (12) exceeds a predetermined set amount of electric energy, and constitutes an electric energy supervising means. Specifically, the set amount of electric energy is set based on a contract amount of electric energy contracted with an electric power company. For example, if the contract amount of electric energy is E [kwh], the set amount of electric energy is set to E [kw]. The set amount of electric energy, however, may be set to a predetermined value (E-Δe) [kw] lower than E [kw].

### (CONFIGURATION OF AIR CONDITIONER ELECTRIC ENERGY MANAGEMENT SECTION)

The air conditioner electric energy management section (61) includes an air conditioner derivation part (62), an air conditioner control part (63), an air conditioner holding part (65) and an air conditioner returning part (66).

The air conditioner derivation part (62) is configured to derive an electric current value of the air conditioner (20) as a physical value relevant to the electric energy consumption of the air conditioner (20) and constitutes a derivation means.

The air conditioner control part (63) includes an amount-of-reduction setting part (64), is configured to control the electric current value of the air conditioner (20) to a predetermined target value so that when inputting a demand signal output from the electric energy supervising part (13), the electric energy consumption of the air conditioner (20) can be reduced, and constitutes a control means. Specifically, in the air conditioner control part (63), the amount-of-reduction setting part (64) employs as a default value the electric current value of the air conditioner (20) at the start of output of a demand signal, which has been derived by the air conditioner derivation part (62), and sets, based on the default value, a set amount of reduction that is a set amount for changing the electric current value.
Furthermore, the air conditioner control part (63) sets, to the target value, an electric current value obtained by changing the electric current of the air conditioner (20) to reduce it from the default value by the set amount of reduction. The air conditioner control part (63) is also configured to reduce the electric current value of the air conditioner (20) from the default value by the set amount of reduction at specified time intervals so long as it continues to input the demand signal from the electric energy supervising part (13). Furthermore, the air conditioner control part (63) stores a lower limit that is a limit value of electric current necessary to drive the air conditioner (20), and is configured, when the target value obtained from the default value and the set amount of reduction goes below the lower limit, to set the lower limit to a new target value.

The air conditioner holding part (65) is configured to control the air conditioner (20) so that when the electric energy supervising part (13) stops outputting a demand signal, the electric current value of the air conditioner (20) is held at the target value at the stop of output of the demand signal until a predetermined holding time passes since the stop of output of the demand signal, and constitutes a holding means. The holding time is set to a predetermined time (for example, 30 minutes) that can be a reference for calculating the contract amount of electric energy.

The air conditioner returning part (66) is configured, when the predetermined holding time of the air conditioner holding part (65) has passed without a next demand signal being output from the electric energy supervising part (13), to return the electric current value of the air conditioner (20) to a value before the output of the previous demand signal from the electric energy supervising part (13) and constitutes a returning means.

### (CONFIGURATION OF WATER HEATER CONTROL SECTION)

The water heater electric energy management section (71) includes a water heater derivation part (72), a water heater control part (73), a water heater holding part (75) and a water heater returning part (76).

The water heater derivation part (72) is configured to derive an electric current value of the water heater (40) as a physical value relevant to the electric energy consumption of the water heater (40) and constitutes a derivation means.

The water heater control part (73) includes an amount-of-reduction setting part (74), is configured to control the electric current value of the water heater (40) to a predetermined target value so that when inputting a demand signal output from the electric energy supervising part (13), the electric energy consumption of the water heater (40) can be reduced, and constitutes a control means. Specifically, in the water heater control part (73), the amount-of-reduction setting part (74) employs as a default value the electric current value of the water heater (40) at the start of output of a demand signal, which has been derived by the water heater derivation part (72), and sets, based on the default value, a set amount of reduction that is a set amount for changing the electric current value. Furthermore, the water heater control part (73) sets, to the target value, an electric current value obtained by changing the electric current of the water heater (40) to reduce it from the default value by the set amount of reduction. The water heater control part (73) is also configured to reduce the electric current value of the water heater (40) from the default value by the set amount of reduction at specified time intervals so long as the electric energy supervising part (13) continues to output the demand signal. Furthermore, the water heater control part (73) stores a lower limit that is a limit value of electric current necessary to drive the water heater compressor (44), and is configured, when the target value obtained from the default value and the set amount of reduction goes below the lower limit, to set the lower limit to a new target value.

The water heater holding part (75) is configured to control the water heater (40) so that when the electric energy supervising part (13) stops outputting a demand signal, the electric current value of the water heater (40) is held at the target value at the stop of output of the demand signal until a predetermined holding time passes since the stop of output of the demand signal, and constitutes a holding means. Specifically, the holding time is set to a predetermined time (for example, 30 minutes) that can be a reference for calculating the contract amount of electric energy.

The water heater returning part (76) is configured, when the predetermined time of the water heater holding part (75) has passed without a next demand signal being output from the electric energy supervising part (13), to return the electric current value of the water heater (40) to a value before the output of the previous demand signal from the electric energy supervising part (13) and constitutes a returning means.

### - OPERATIONAL BEHAVIOR -

Next, a description is given of the behaviors of the air conditioner (20), the water heater (40) and the electric energy control system (1).

### <BEHAVIOR OF AIR CONDITIONER>

The air conditioner (20) selectively performs a cooling operation and a heating operation.

In the cooling operation, the four-way selector valve (27) is selected to the position shown in the solid lines in FIG 2, so that the air conditioner compressor (26) and the fans (30, 32) are driven. Thus, the refrigerant circulates in a direction shown in the solid arrow in FIG. 2, whereby the refrigerant exchanges heat with outside air and room air in the heat exchangers (28, 31).

The refrigerant discharged from the air conditioner compressor (26) in the outdoor unit (24) releases heat, in the outdoor heat exchanger (28), to outside air to condense into liquid form. The liquid refrigerant is reduced in pressure by the air conditioner expansion valve (29) to expand and is then introduced into the indoor unit (23). The expanded refrigerant takes heat, in the indoor heat exchanger (31), from room air sent by the indoor fan (32) to evaporate, thereby cooling the room air. Thus, the room is cooled. Then, the evaporated refrigerant is introduced into the outdoor unit (24), sucked into the air conditioner compressor (26) and compressed therein.

On the other hand, in the heating operation, the four-way selector valve (27) is selected to the position shown in the broken lines in FIG 2, so that the air conditioner compressor (26) and the fans (30, 32) are driven. Thus, the refrigerant circulates in a direction shown in the dashed arrow in FIG. 2, whereby the refrigerant exchanges heat with outside air and room air in the heat exchangers (28, 31).

The refrigerant discharged from the air conditioner compressor (26) in the outdoor unit (24) releases heat, in the indoor heat exchanger (31), to room air sent by the indoor fan (32) to condense, thereby heating the room air. Thus, the room is heated. Then, the condensed refrigerant expands in the air conditioner expansion valve (29), then takes heat from outside air to evaporate while flowing through the outdoor heat exchanger (28), is then sucked into the compressor (26) again and compressed therein.

### <BEHAVIOR OF WATER HEATER>

The water heater (40) performs a hot water supply operation.

In the hot water supply operation, the water heater compressor (44) and the evaporator fan (47) are driven in the heat source unit (41). Furthermore, the pumps (51, 49) on the heating pipe (50) and the water supply pipe (48) both connected to the hot water storage tank (42) are appropriately driven.

In the refrigerant circuit (53) of the heat source unit (41), the refrigerant circulates in a direction shown in the arrow in FIG. 3. The refrigerant having flowed through the water heater compressor (44) flows through the first channel (45a) of the condenser heat exchanger (45) and releases heat to the water for hot water supply flowing through the second channel (45b) to condense into liquid form. Then, the refrigerant in liquid form is reduced in pressure by the water heater expansion valve (46) to expand, then flows through the evaporator heat exchanger (43) and takes heat therein from outside air to evaporate. The evaporated refrigerant is sucked into the water heater compressor (44) again and compressed therein.

On the other hand, in the hot water storage tank (42), the water for hot water supply stored in the lower part of the hot water storage tank (42) flows through the heating pipe (50), then flows through the second channel (45b), is heated therein by the refrigerant flowing through the first channel (45a) and then returned to an upper part of the hot water storage tank (42). The hot water stored in the upper part of the hot water storage tank (42) is supplied to the user through the hot water supply pipe (52) connected to the top of the hot water storage tank (42). Furthermore, water for hot water supply is appropriately supplied into the hot water storage tank (42) through the water supply pipe (48) connected to the bottom of the hot water storage tank (42).

### <BEHAVIOR OF ELECTRIC ENERGY CONTROL SYSTEM>

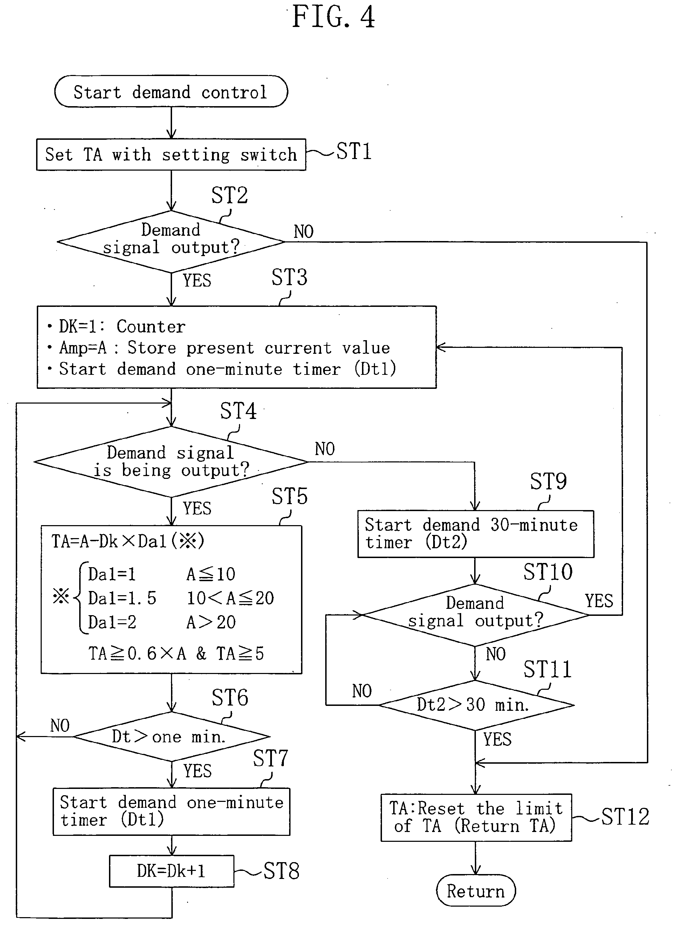

Next, a description is given of the behavior of the electric energy control system (1) with reference to FIG 1 and FIG. 4. Although the electric energy control system (1) controls the electric energies of the air conditioner (20) and the water heater (40), only the control on the air conditioner (20) is described in this embodiment.

First, as shown in FIG. 4, when a demand control of the electric energy control system (1) starts, the air conditioner (20) operates, in Step ST1, at a specified electric current value TA set by a setting switch.

Next, in Step ST2, it is determined whether the electric energy supervising part (13) has output a demand signal. If the electric energy supervising part (13) has output a demand signal, the control proceeds to Step ST3. If it has not output a demand signal, the control proceeds to Step ST12.

In Step ST3, the electric energy detection part (12) has already detected the total electric energy consumption of the store and, therefore, the electric energy supervising part (13) outputs a demand signal when the total electric energy consumption has reached a set amount of electric energy. When the air conditioner control part (63) receives the demand signal, it starts the control on the electric current of the air conditioner (20). Specifically, in Step ST3, a counter DK is set, the air conditioner derivation part (52) derives the electric current value of the air conditioner (20) at the time of determination in Step ST2 that a demand signal has been output, and the air conditioner control part (63) stores the electric current value as a default value A. Thus, a one-minute timer (Dt1) is started and the control proceeds to Step ST4. In Step ST4, it is determined whether the electric energy supervising part (13) is outputting a demand signal. If it is determined that the demand signal is being output, the control proceeds to Step ST5. If it is determined that the demand signal is not being output, the control proceeds to Step ST9.

In Step ST5, the air conditioner control part (63) controls the air conditioner (20) so that the electric current of the air conditioner (20) reaches a target value TA set based on the default value A.

Specifically, first, the amount-of-reduction setting part (64) sets a set amount of reduction Da1 according to the default value A. When the default value A of electric current of the air conditioner (20) is 10[A] or less, the set amount of reduction Da1 is 1. When the default value A is more than 10[A] and not more than 20[A], the set amount of reduction Da1 is 1.5. When the default value A is more than 20[A], the set amount of reduction Da1 is 2. In this manner, the amount-of-reduction setting part (64) sets the set amount of reduction Da1 to increase it as the default value A increases. The air conditioner control part (63) controls the electric current of the air conditioner (20) to reach an electric current reduced from the default value A by the set amount of reduction Da1. In other words, since the set amount of reduction Da1 is 1.5 when the default value A is 15[A], the target value TA for the counter (DK=1) is set to 13.5[A] and the air conditioner control part (63) controls the air conditioner (20) so that the electric current value of the air conditioner (20) reaches 13.5[A].

Furthermore, for the specified electric current value TA of the air conditioner (20), a lower limit of 5[A] necessary for operation is set. The lower limit of 5[A] is a minimum electric current value necessary to drive the air conditioner (20). Furthermore, the target value TA is set to be 0.6 or more times larger than the default value A. This is to prevent the electric current value of the air conditioner (20) from rapidly decreasing from the default value A to abruptly deteriorate the capacity. If the target value TA set based on the default value is smaller than the lower limit of 5[A] or smaller than 0.6 times the default value A, either the lower limit of 5[A] or 0.6 times the default value A is set as a new target value TA.

Then, in Step ST6, the air conditioner control part (63) holds the target value TA for the counter (DK=1) until one minute passes. If it is determined that one minute has passed, a one-minute timer (Dt1) is started in Step ST7, the counter is incremented by 1 in Step ST8, the control then proceeds to Step ST4 and it is determined again whether a demand signal is being output.

If it is determined in Step ST4 that a demand signal is being output, the control proceeds to Step ST5 again and, in Step ST5, the air conditioner control part (63) sets the target value TA of electric current of the air conditioner (20) for the counter (DK=2) to a value obtained by subtracting the set amount of reduction twice from the default value A. In other words, when the default value A is 15[A], the target value TA for the counter (DK=2) is set to 12[A] and the air conditioner control part (63) controls the air conditioner (20) so that the electric current value of the air conditioner (20) reaches 12[A]. In this manner, every one minute when the counter DK is incremented by 1, the air conditioner control part (63) sets the target value by reducing the default value A by a set amount of reduction. Then, the control proceeds to Steps ST6, ST7 and ST8 again and is repeated until it is determined in Step ST4 that a demand signal is not being output.

If it is determined in Step ST4 that a demand signal is not being output, the control proceeds to Step ST9. In Step ST9, a 30-minute timer (Dt2) is started and the air conditioner holding part (65) controls the air conditioner (20) to hold the electric current value of the air conditioner (20) at an electric current value thereof at the time of determination that the demand signal has not been being output. Specifically, in the above-stated control from Steps ST4 to ST8, the electric current value of the air conditioner (20) is held at the target value for the counter (DK=2), for example, 12A, while the counter (DK=2) counts one minute. If the demand signal is not detected when the control proceeds to Step ST4 again, the air conditioner holding part (65) in Step ST9 holds the electric current of the air conditioner (20) at 12A, the target value TA at the time when the output of the demand signal is stopped.

Then, the control proceeds to Step ST10 and it is determined in Step ST10 whether the electric energy supervising part (13) has output a demand signal. If it is determined that a demand signal has not been output, the target value TA is held for 30 minutes in Step ST11. On the other hand, if it is determined that a demand signal has been output, the control proceeds to Step ST3 again and starts the control to reduce the target value TA. Then, if a demand signal has not been output for 30 minutes, the control proceeds to Step ST12, the limit to the target value TA is reset in Step ST12 and the control returns to the start.

In the electric energy control system (1), the water heater electric energy management section (71) controls the electric current of the water heater (40) in the same manner as the flow chart shown in FIG. 4. Used in this case as the set amount of reduction set according to the default value of the electric current is a value appropriate to the water heater (40). Every time when a demand signal is output, the air conditioner electric energy management section (61) and the water heater electric energy management section (71) control the electric currents of these apparatuses (20, 40). When either one of the apparatuses (20, 40) reaches the lower limit of its electric current, the target value TA of electric current of the apparatus (20, 40) is held at the lower limit necessary for its operation. In this case, only the control to reduce the electric current of the other apparatus (40, 20) is made. Note that the water heater (40) can store heat by storing hot water in the hot water storage tank (42). Therefore, when a sufficient amount of hot water is stored in the hot water storage tank (42), the control on the water heater (40) may be appropriately selectively made, such as by reducing only the electric current of the water heater (40).

### - EFFECTS OF EMBODIMENT 1 -

According to the present invention, when the electric energy supervising part (13) outputs a demand signal, the air conditioner control part (63) employs as a default value the electric current value of the air conditioner (20) at the start of output of the demand signal and brings the electric current of the air conditioner (20) to a target value reduced from the default value by a set amount of reduction determined based on the default value. Therefore, the electric current of the air conditioner (20) can be appropriately reduced. Thus, the total electric energy consumption of the main power source (10) can be promptly and certainly reduced without reduction of the electric energy consumption of the air conditioner (20) more than necessary.

Furthermore, since the air conditioner control part (63) reduces the electric current of the air conditioner (20) by the set amount of reduction once every minute so long as the electric energy supervising part (13) continues to output the demand signal, the electric energy consumption of the air conditioner (20) can certainly be reduced. In addition, as a result, the total electric energy consumption of the plurality of electric apparatuses (20, 40, 80, 90) used in the store can certainly be reduced to the set amount of electric energy or below.

Furthermore, since, in controlling the electric current of the air conditioner (20), the air conditioner control part (63) controls the electric current to be above a lower limit necessary for the operation of the air conditioner (20), the air conditioner (20) does not stop and can continue to be operated.

Furthermore, when the electric energy supervising part (13) outputs a demand signal and then stops outputting the signal, the air conditioner holding part (65) holds the electric current of the air conditioner (20) at a target value at the stop of output of the demand signal. Therefore, the electric current of the air conditioner (20) can be brought to a value as large as possible insofar as no demand signal is output.

Specifically, as described above, a demand signal is output when the electric current of the air conditioner (20) is 15A, for example. Then, the output of the demand signal is stopped because the electric current is reduced once every minute, first to 13.5A and then to 12A. Therefore, there is no need to reduce the electric current value of the air conditioner (20) to below 12A. On the contrary, if the electric current is returned to 13.5A or 15A, a demand signal might be output again. To cope with this, the electric current of the air conditioner (20) is held at 12A that is a maximum value insofar as a demand signal is not induced. Thus, the air conditioner (20) can be operated to meet the load as much as possible insofar as the total electric energy consumption does not exceed the set amount of electric energy. In addition, since the time for which the above electric current value is held is set to a predetermined time (for example, 30 minutes) that is a reference for calculating the contract amount of electric energy, it can certainly be prevented that the total electric energy consumption exceeds the contract amount of electric energy.

Furthermore, when the predetermined time has passed without a next demand signal being output during the control of the air conditioner holding part (65), the air conditioner returning part (66) returns the electric current of the air conditioner (20) to the previous value again to operate the air conditioner (20) at an electric current value meeting the load. Therefore, when the predetermined time that is a reference for calculating the contract amount of electric energy has passed, the air conditioner (20) can be operated again at an electric current value meeting the air conditioning load or an input from the user. In short, the air conditioner can be appropriately operated to meet the load as much as possible while not exceeding the contract amount of electric energy.

Furthermore, since the electric energy control system (1) does not control the electric currents of the lighting apparatus (80) and the refrigeration unit (90), the lighting apparatus (80) can certainly illuminate the interior of the store and the refrigerant unit (90) can certainly cool stored goods in the storage, such as food products.

### MODIFICATION 1 OF EMBODIMENT 1 -

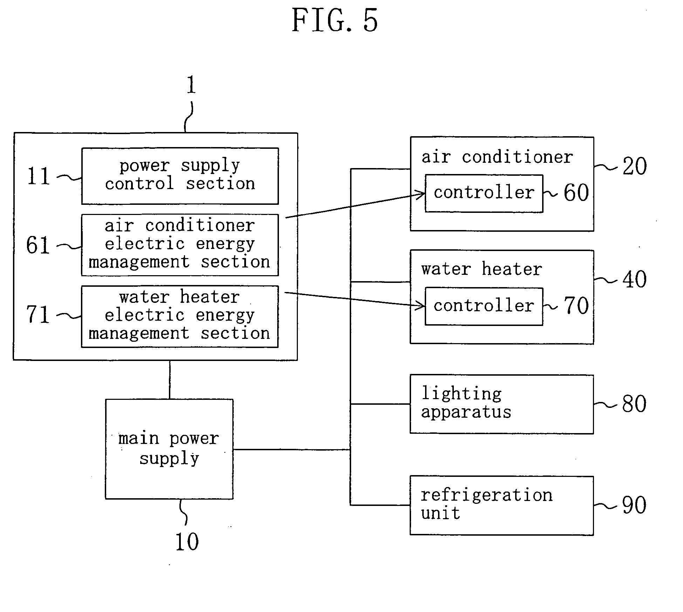

In Embodiment 1, the air conditioner electric energy management section (61) of the electric energy control system (1) is built in the controller (60) of the air conditioner (20) and the water heater electric energy management section (71) thereof is built in the controller (70) of the water heater (40). In this embodiment, unlike the above, as shown in FIG. 5, the air conditioner and water heater electric energy management sections (61, 71) are separate from the respective associated controllers (60, 70) of the above electric apparatuses (20, 40). Furthermore, in this embodiment, the controller (60) of the air conditioner (20) is configured to variably control the electric current of the air conditioner (20) and the controller (70) of the water heater (40) is configured to variably control the electric current of the water heater (40).

The electric energy control system (1) is configured so that a power supply control section (11), the air conditioner electric energy management section (61) and the water heater electric energy management section (71) are contained in a single casing. In the electric energy control system (1), when an unshown power supply supervising part in the power supply control section (11) outputs a demand signal, the demand signal is input into an unshown air conditioner control part of the air conditioner electric energy management section (61) and the air conditioner control part sets a target value TA of electric current of the air conditioner (20). The air conditioner control part controls the electric current of the air conditioner (20) to reach the target value by controlling the controller (60). The water heater (40) is also controlled in the same manner by the water heater electric energy management section (71).

As seen from the above, according to this embodiment, the air conditioner electric energy management section (61) and the water heater electric energy management section (71) need not be previously built in the air conditioner (20) and the water heater (40), respectively. Therefore, according to the electric energy control system (1) of this embodiment, the electric currents of the existing air conditioner (20) and water heater (40) can be controlled from outside to appropriately reduce the respective electric energy consumptions of these apparatuses (20, 40).

The rest of the configuration and the other operations and effects are the same as in Embodiment 1.

### - MODIFICATION 2 OF EMBODIMENT 1 -

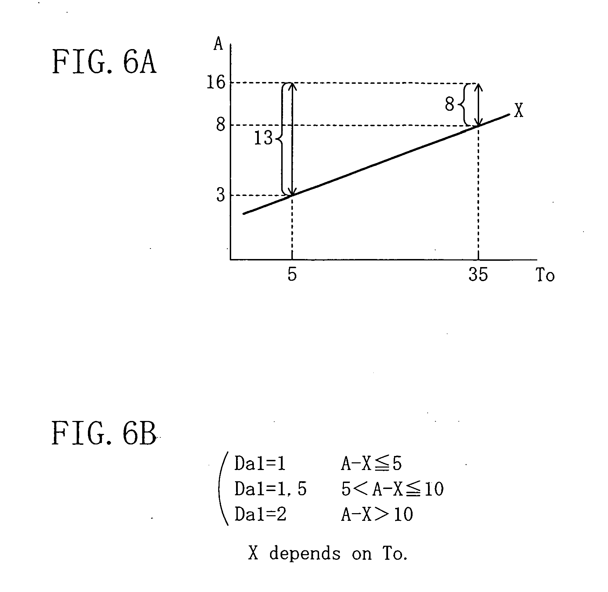

In Embodiment 1, the electric energy control system (1) sets the set amount of reduction of the electric current of the air conditioner (20) based only on the default value. In this embodiment, unlike the above, as shown in FIG. 6, the set amount of reduction is corrected according to the outside air temperature.

A higher load is applied to the air conditioner (20) as the outside air temperature increases, such as that a large load is applied thereto in the summer and a small load is applied thereto in the winter. Therefore, in this embodiment, the correction value X increasing with increasing outside air temperature To is used to set the set amount of reduction Da by subtracting the correction value X from the default value A. Specifically, the correction value X is set to 8[A] at an outside air temperature of 35°C and 3[A] at an outside air temperature of 5°C. When the value obtained by subtracting the correction value X from the default value A is 5[A] or less, the set amount of reduction Da1 is 1. When the value obtained by subtracting the correction value X from the default value A is more than 5[A] and not more than 10[A], the set amount of reduction Da1 is 1.5. When the value obtained by subtracting the correction value X from the default value A is more than 10[A], the set amount of reduction Da1 is 2.

Thus, when a demand signal is output at an outside air temperature of 35°C and the default value A is 16[A], the value obtained by subtracting the correction value, 8[A], from the default value, 16[A], is 8[A] and the set amount of reduction Da1 is 1.5. On the other hand, when a demand signal is output at an outside air temperature of 5°C and the default value A is 16[A], the value obtained by subtracting the correction value, 3[A], from the default value, 16[A], is 13[A] and the set amount of reduction Da1 is 2. In other words, at an outside air temperature of 5°C, the electric energy consumption is large because the outside air temperature is low and the load is small even if the default value A is the same as at an outside air temperature of 35°C. Therefore, the amount of reduction is increased.

According to this embodiment, since the set amount of reduction is corrected according to the outside air temperature, the electric energy consumption of the air conditioner (20) can be appropriately reduced while the air conditioner (20) meets the load as much as possible.

For the water heater (40), unlike the air conditioner (20), a large load is applied thereto in the winter and a small load is applied thereto in the summer. Therefore, the correction value X may be set to decrease with increasing outside air temperature To.

The rest of the configuration and the other operations and effects are the same as in Embodiment 1.

### <<EMBODIMENT 2 OF THE INVENTION >>

In Embodiment 1, the electric current of the air conditioner (20) is controlled as a physical value relevant to the electric energy of the air conditioner (20) during both the cooling and heating operations. In Embodiment 2, unlike the above, the pressure of high-pressure refrigerant in the refrigerant circuit (21) is controlled as a physical value relevant to the electric energy of the air conditioner (20) during the cooling operation. Therefore, this embodiment is configured so that the air conditioner derivation part (62) derives the pressure value of the high-pressure refrigerant and that the air conditioner control part (63), the air conditioner holding part (65) and the air conditioner returning part (66) control the pressure value of the high-pressure refrigerant.

Specifically, in this embodiment, when the electric energy supervising part (13) outputs a demand signal, the air conditioner control part (63) controls the water sprayer (33) to spray water on the outdoor heat exchanger (28). Thus, the condensation temperature of the outdoor heat exchanger (28) is dropped to reduce the pressure of high-pressure refrigerant in the refrigerant circuit (21).

When inputting the demand signal output from the electric energy supervising part (13), the air conditioner control part (63) employs as a default value P the pressure of the high-pressure refrigerant at the start of output of the demand signal, which has been derived by the electric energy supervising part (13), and controls the pressure of the high-pressure refrigerant to reach a target value TP reduced from the default value P by a set amount of reduction Dp set based on the default value P. The set amount of reduction Dp is set to increase as the default value P increases.

Furthermore, so long as the electric energy supervising part (13) continues to output the demand signal, the air conditioner control part (63) controls the pressure of the high-pressure refrigerant by setting the target value TP to a value reduced from the default value P by the set amount of reduction Dp at specified time intervals. When the electric energy supervising part (13) stops outputting the demand signal, the air conditioner holding part (65) controls the air conditioner (60) to hold the pressure value of the high-pressure refrigerant at the stop of the demand signal for a predetermined time (for example, 30 minutes) that can be a reference for calculating the contract amount of electric energy. If no demand signal is output within this predetermined time, the air conditioner returning part (66) stops the water spray of the water sprayer (33) on the outdoor heat exchanger (28) and returns the pressure value of the high-pressure refrigerant.

Although in this embodiment the air conditioner control part (63) controls the pressure of the high-pressure refrigerant in the refrigerant circuit (21) during the cooling operation, the air conditioner control part (63) may selectively control, according to the operating conditions, the electric current of the air conditioner (20) in Embodiment 1 or the pressure of the high-pressure refrigerant in this embodiment.

The rest of the configuration and the other operations and effects are the same as in Embodiment 1.

### << OTHER EMBODIMENTS >>

The above embodiments of the present invention may have the following configurations.

Although the electric current of the air conditioner (20) is controlled as a physical value relevant to the electric energy of the air conditioner (20) in Embodiment 1 and the pressure of high-pressure refrigerant in the refrigerant circuit (21) is controlled as a physical value relevant to the electric energy in Embodiment 2, the electric energy consumption of the air conditioner (20) may be directly controlled as a physical value relevant to the electric energy. The preset temperature of the air conditioner (20) or the operating capacity of the air conditioner compressor (26) may be controlled as a physical value of the electric energy. In controlling the preset temperature of the air conditioner (20), the preset temperature is changed to increase during the cooling operation and changed to decrease during the heating operation.

Although in Embodiment 1 the air conditioner (20) and the water heater (40) are assigned as first electric apparatuses having low priority to meet their loads and the lighting apparatus (80) and the refrigeration unit (90) are assigned as second electric apparatus having high priority to meet their loads, there is no special restriction on the selection of the first and second electric apparatuses. In other words, either one of the air conditioner (20) and the water heater (40) may be a first electric apparatus depending on the season or the lighting apparatus (80) may be a first electric apparatus.

In Embodiment 1, the set amount of electric energy that can be a reference for outputting a demand signal is determined from the contract amount of electric energy. However, the set amount of electric energy for the total electric energy consumption is not limited to that determined from the contract amount of electric energy and, for example, may be an upper limit of electric energy appropriately set from the viewpoint of energy saving.

The above embodiments are merely preferred embodiments in nature and are not intended to limit the scope, applications and use of the invention.

### INDUSTRIAL APPLICABILITY

As can be seen from the above description, the present invention is useful for an electric energy control system that can reduce the total electric energy consumption.

## Claims

1. An electric energy control system comprising:
electric energy detecting means (12) for detecting the total electric energy consumption of a plurality of electric apparatuses (20, 40, 80, 90);
derivation means (62, 72) for deriving a physical value relevant to the electric energy consumption of previously assigned at least one first electric apparatus (20, 40) of the plurality of electric apparatuses (20, 40, 80, 90);
electric energy supervising means (13) for outputting a demand signal when the total electric energy consumption detected by the electric energy detecting means (12) exceeds a predetermined set amount of electric energy; and
control means (63, 73) for controlling the first electric apparatus (20, 40) to reduce the electric energy consumption of the first electric apparatus (20, 40) so that when the electric energy supervising means (13) outputs the demand signal, the control means (63, 73) employs as a default value the physical value of the first electric apparatus (20, 40) at the start of output of the demand signal and brings the physical value of the first electric apparatus (20, 40) to a target value changed from the default value by a set amount determined based on the default value.

2. The electric energy control system of claim 1, wherein the control means (63, 73) sets the target value by changing the default value by the set amount at specified time intervals.

3. The electric energy control system of claim 2, wherein when the target value reaches a limit of the physical value of the previously assigned first electric apparatus (20, 40), the control means (63, 73) sets the limit as the target value.

4. The electric energy control system of claim 1, further comprising holding means (65, 75) for controlling the first electric apparatus (20, 40) so that when the electric energy supervising means (13) stops outputting the demand signal, the physical value of the first electric apparatus (20, 40) is held at the target value at the stop of output of the demand signal until a predetermined holding time passes since the stop of output of the demand signal.

5. The electric energy control system of claim 4, further comprising returning means (66, 76) configured, when the holding time of the holding means (65, 75) has passed without a next demand signal being output from the electric energy supervising means (13), to return the physical value of the first electric apparatus (20, 40) to a value before the output of the previous demand signal from the electric energy supervising means (13).

6. The electric energy control system of claim 1, wherein
the first electric apparatus (20, 40) is an electric apparatus (20, 40) having low priority to meet the load, and
the remaining second electric apparatus (80, 90) other than the first electric apparatus (20, 40) is an electric apparatus (80, 90) having high priority to meet the load.

7. The electric energy control system of claim 6, wherein the first electric apparatus (20, 40) is an air conditioner (20).

8. The electric energy control system of claim 7, wherein
the air conditioner (20) comprises a refrigerant circuit in which an indoor heat exchanger (31), a compressor (26) whose capacity is variable, a heat-source side heat exchanger (28) and an expansion mechanism (29) are connected in this order, and
the physical value relevant to the electric energy is one of the electric current of the air conditioner (20), the electric energy consumption of the air conditioner (20), the operating capacity of the compressor (26), the pressure of high-pressure refrigerant in the refrigerant circuit and the preset temperature of the air conditioner (20).

9. The electric energy control system of claim 7, wherein
the air conditioner (20) is configured to perform at least a cooling operation in which the indoor heat exchanger (31) serves as an evaporator and the heat-source side heat exchanger (28) serves as a condenser and comprises a sprayer (33) for spraying water on the heat-source side heat exchanger (28), and
the control means (63) controls the sprayer (33) so that when the electric energy supervising means (13) outputs the demand signal, the sprayer (33) sprays water on the heat-source side heat exchanger (28).

10. The electric energy control system of claim 7, wherein the set amount is corrected by a correction value based on the outside air temperature.
